# EUROPEAN PATENT APPLICATION

(11) **EP 2 506 685 A1**
(43) Date of publication of application: **03.10.2012**
(21) Application number: 10860335.8
(22) Date of filing: 02.12.2010
(51) Int. Cl.: H05B 37/02

(54) **LED DRIVING POWER SUPPLY CIRCUIT, DRIVING POWER SUPPLY AND LIGHTING DEVICE**

(71) Applicant: Smar Analog Technology Co., Ltd, Shenzhen, Guangdong 518000 (CN)
(72) Inventor: SUN, Jianning, Shenzhen Guangdong 518000 (CN)
(74) Representative: Protector IP Consultants AS
(86) International application number: PCT/CN2010/079402
(87) International publication number: WO 2012/071733

(57) **Abstract**

The present invention is adapted for the field of power supply and provides a circuit of LED driving power, LED driving power and LED lighting device, the circuit of LED driving power comprises a over-voltage protection unit, a AC input filter unit, a full-wave rectifier unit and a single-stage power conversion unit, where the single-stage power conversion unit comprises an auxiliary power supply circuit, a switching circuit and a control unit in which the auxiliary power supply circuit is used to provide auxiliary power supply for single power conversion stage, the switching circuit is used to control DC output by switching on and switching off and the control unit is used to control time point of turning on and turning off dynamically based on the information collected. The present invention can improve the overall efficiency of the LED driving power by controlling switching circuit dynamically in single-stage power conversion unit.

## Description

### BACKGROUND OF THE INVENTION

### 1. Technical Field

The invention relates to power supply field, and more particularly, to a circuit of LED driving power, a driving power and a lighting device.

### 2. Description of Related Art

With the rapid improvement of LED technology, LED lighting is becoming increasingly popular as a choice of lighting. It is evident that the conventional incandescent bulb is replaced by LED bulb. Correspondingly, there is an increasing need for a suitable LED driving power.

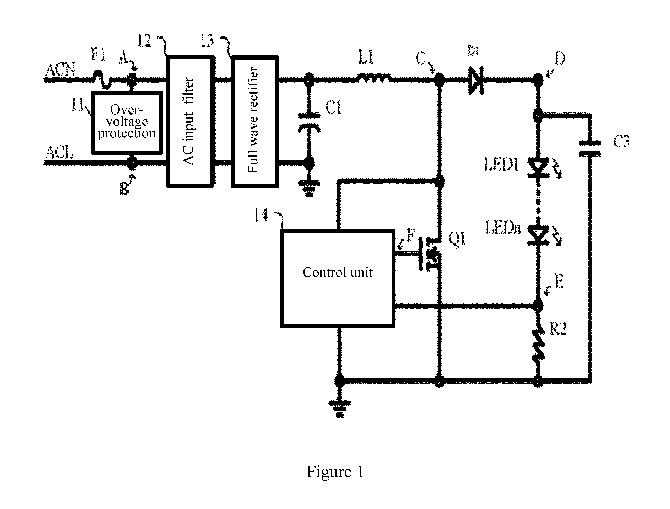

In prior art, there are a variety of LED driving powers having different functions, but most of these driving powers have obvious shortcomings such as low efficiency, high energy consumption. For example, Figure 1 shows a typical structure of non-isolated LED AC-DC boost driving power. The AC power arrives at full-wave rectifier 13 crosses through fuse F1 and AC input filter circuit 12. The power flowed out from full-wave rectifier 13 is filtered by filter capacitor C1. The filter capacitor is connected to a single stage discontinuous conduction mode (DCM) buck power converter. The DCM buck power converter works in constant switch frequency and PWM mode. One deficiency of the structure is that the power factor (PF) is low; another deficiency is that the control power is obtained by descending the output of the high voltage MOSFET, where the total power efficiency is too low.

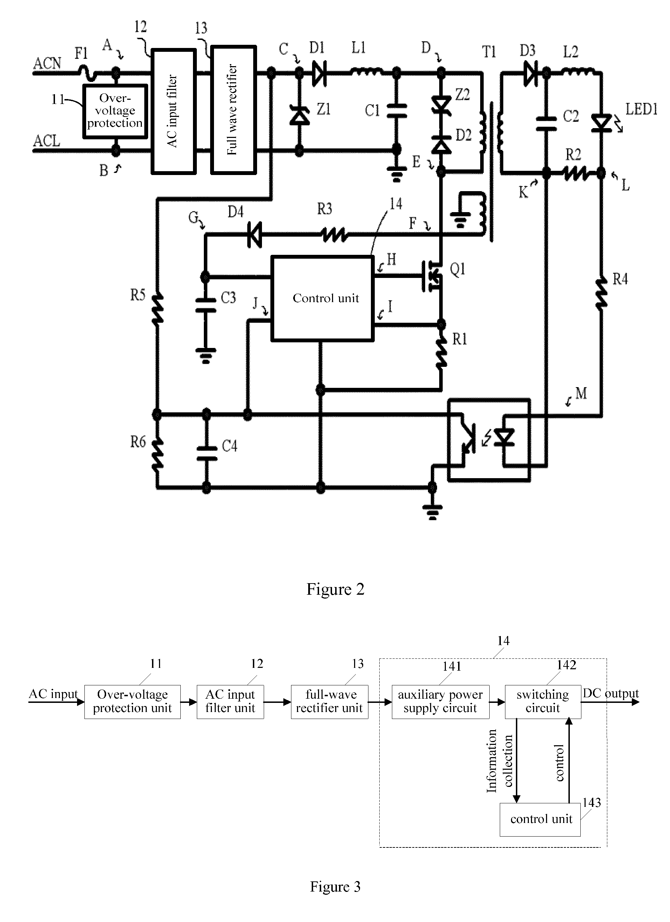

Figure 2 shows a typical structure of reverse-drive isolated AC-DC LED driving power, the AC power arrives at full-wave rectifier 13 through fuse F1 and AC input filter circuit 12. The power output from the full-wave rectifier 13 is filtered by filter capacitor C1. The filter capacitor C1 is followed with a single stage discontinuous conduction mode (DCM) Buck power converter. The driving power works in constant switch frequency and PWM work mode. The power supply for low voltage control circuit is acquired by rectifier diode from transformer's assistant winding. The deficiency of such circuit is high power consumption and low power efficiency.

### BRIEF SUMMARY OF THE INVENTION

An object of an embodiment of the present invention is to provide a circuit of LED driving power, in order to solve the problem of high power consuming and low power efficiency in the circuit of LED driving power.

To achieve above object, a circuit of LED driving power is presented, the circuit comprises an over-voltage protection unit, a AC input filter unit, a full-wave rectifier unit and a single-stage power conversion unit, where the single-stage power conversion unit comprises an auxiliary power supply circuit, a switching circuit and a switching control unit, wherein:
the Auxiliary power supply circuit connected with the output port of the full-wave rectifier unit is used to provide auxiliary power supply for the switching circuit;
the switching circuit connected with the auxiliary power supply circuit, switching control unit and DC power output controls power output by turning on and turning off the main switch;
the switching control unit connected with the switching circuit is used to control the switching circuit dynamically according to the collected information from switching circuit.

Another object of the present invention is to provide an LED driving power having the mentioned circuit of LED driving power.

Another object of this invention is to provide an LED lighting device having the above-mentioned LED driving power.

In the embodiment of the present invention, the predetermined output current is obtained based on the steps comprising detecting the sampling circuit, controlling the on or off time of the switch. In order to decrease the energy consumption of the main switch, the main switch on or off is controlled by detecting the peak value and the valley value at input port of the main switch. The peak value and the valley value at input port of the main switch and the voltage value at the first port of the energy storage capacitor is detected in order to control the main switch on or off, which charges the storage capacitor, thus the total power efficiency is improved.

### BRIEF DESCRIPTION OF THE SEVERAL VIEWS OF THE DRAWINGS

For a more complete understanding of the present invention and for further features and advantages, reference is now made to the following description taken in conjunction with accompanying drawings, in which:
Figure 1 is an existing circuit structure diagram illustrating non-isolated LED AC-DC boost driving power;
Figure 2 is an existing circuit structure diagram illustrating reverse-drive isolated LED AC-DC driving power;
Figure 3 is a function diagram illustrating the circuit of LED driving power in the present invention;
Figure 4 is a circuit structure diagram illustrating the circuit of LED driving power in the first embodiment of the present invention;
Figure 5 is a circuit structure diagram illustrating the circuit of LED driving power in the second embodiment of the present invention;
Figure 6 is a circuit structure diagram illustrating circuit of LED driving power in the third embodiment of the present invention.

### DETAILED DESCRIPTION OF THE INVENTION

In order to make clearer the objects, technical solutions and advantages of the invention, the present invention will be explained below in detail with reference to the accompanying drawings and embodiments. It is to be understood that the following description of the embodiments is merely to explain the present invention and is no way intended to limit the invention.

In the embodiment of the present invention, the predetermined output current is obtained based on the steps comprising detecting the sampling circuit, controlling the on or off time of the switch. In order to decrease the energy consumption of the main switch, the main switch on or off is controlled by detecting the peak value and the valley value at input port of the main switch. The peak value and the valley value at input port of the main switch and the voltage value at the first port of the energy storage capacitor is detected in order to control the main switch on or off, which charges the storage capacitor, thus the total power efficiency is improved.

The circuit of LED driving power comprises an over-voltage protection unit, an AC input filter unit, a full-wave rectifier unit and a single-stage power conversion unit comprising an auxiliary power supply circuit, a switching circuit and a switching control unit.

The Auxiliary power supply circuit connected with the output port of the full-wave rectifier unit is used to provide auxiliary power supply for the switching circuit.

The switching circuit connected with auxiliary power supply circuit and switching control unit controls DC power output by turning on and turning off the main switch.

The switching control unit connected with the switching circuit is used to control the switching circuit dynamically based on the collected information from switching circuit.

A first embodiment:
Figure 3 is a function diagram illustrating the circuit of LED driving power according to an embodiment of the present invention; and for convenience of description, only parts related to the embodiment of the present invention are shown.

The overvoltage protection unit 11 is used to protect the downstream circuit from damage due to excessive voltage.

The AC input filter unit 12 is connected with the overvoltage protection unit 11 in order to filter the input AC.

The full-wave rectifier unit 13 is connected with AC input filter unit 12 for rectifying the power from the AC input filter unit 12.

The single-stage power conversion circuit 14 comprises an auxiliary power supply 141, a switch circuit 142 and a switch control unit 143.

In the normal work condition, the AC input power flows across the over-voltage protection unit 11, the AC input filter unit 12 and full-wave rectifier unit 13, then reaches the single-stage power conversion unit 14, and charges the auxiliary power supply circuit 141. The auxiliary power supply circuit 141 provides the switching circuit 142 with auxiliary power. When the voltage of auxiliary power supply circuit 141 reaches the predetermined value, switching circuit unit 142 is charged under the control of the switching control unit 143. When the voltage value of unit 142 reaches the predetermined voltage value, the total single-stage power conversion unit 14 is driven to work. In the present invention, the single-stage power converting unit 14 owns the function of power factor correction (PFC) and DC output current regulation, the total efficiency of LED driving power circuit is improved effectively. In this embodiment of the present invention, the driving circuit is optimized to have the function of power factor correction and output current regulation which improves effectively the total efficiency of LED power driver circuit.

A second embodiment:

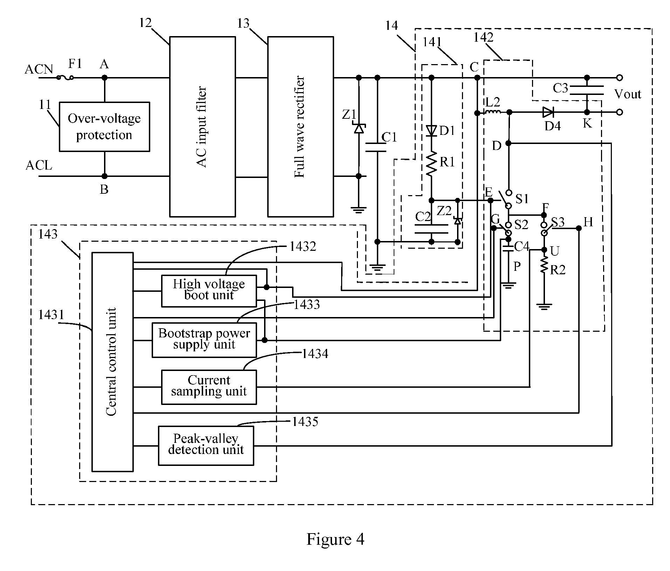

Figure 4 is a function diagram of embodiment illustrating circuit of LED driving power; and for convenience of description, only parts related to the embodiment of the present invention are shown.

Two port of the overvoltage protection unit 11 is connected to the firing line of the AC input and the zero line of the AC input respectively. The AC input filter unit 12, the full-wave rectifier unit 13 and the clamping diode Z1 are connected with the overvoltage protection unit 11 in series. The anode of clamp diode Z1 is connected with ground, one port of capacitor C1 is connected with the cathode of clamping diode Z1 and another port of C1 is connected with ground.

The single-stage power conversion unit 14 is connected with the full-wave rectifier, comprising the auxiliary power supply circuit 141, switching circuit 142 and switch control unit 143.

Particularly, the auxiliary power supply circuit 141 comprises the diodes D1, the current limiting resistor R1, the smoothing capacitor C2 and the clamp diode Z2.

Particularly, the anode of diode D1 is connected with rectifier unit 13 and the cathode of the diode D1 R1 C2 is connected in series to ground.

The cathode of clamping diode Z2 is connected with the first port of C2 and the anode of Z2 is connected with the second port of C2.

The switching circuit 142 comprises a main switch S1, a power inductor L2, a rectifier diode D4, a driving switch S2, a driving switch S3, a current sampling resistor R2 and an energy storage capacitor C4.

The first end of inductor L2 is connected with the auxiliary power supply circuit and the switching control unit. The second port is connected with the anode of D4.

The cathode of the rectifier diode D4 is connected with the DC output port.

The input port of the main switch S1 is connected with the anode of the rectifier diode D4 and the switching control unit respectively. The output port of the main switch S1 is connected with the input port of driving switch S2. The control port of S1 is connected with auxiliary power supply circuit and switching control unit respectively.

The output port of the driving switch S2 is connected with the first port of the storage capacitor C4 and the switching control unit. The control port of S2 is connected with switching control unit.

The second port of storage capacitor C4 is connected to the ground.

The input port of the driving switch S3 is connected with output port of the main switch S1, the output port of the driving switch S3 is connected with the first port of the current sampling resistor R2 and the switching control unit, and the control port of S3 is connected with switching control unit.

The second port of R2 is connected to the ground.

The switch control unit 143 comprises a center control unit 1431, a high-voltage boot unit 1432, a bootstrap power supply unit 1433, a current sampling unit 1434 and a peak-valley detection unit 1435.

The first port of the center control unit 1431 is connected with the first port of the power inductor L2, the second port is connected with the control port of the main switch S1 and the second port of high voltage boot unit 1432, the third port is connected with the first port of the high voltage boot unit 1432, the fourth port is connected with the control port of the driving switch S2, the fifth port is connected with the first port of the bootstrap power supply, the sixth port is connected with the first port of the current sampling unit, the seventh port is connected with the control port of the driving switch S3, and the eighth port is connected with the first port of the peak-valley value detection unit.

The third port of the high voltage boot unit 1432 is connected with the first port of C4 and the second port of the bootstrap power supply unit 1433.

The second port of current sampling unit 1434 is connected with the output port of driving switch S3.

The second port of the peak-valley value detection unit 1435 is connected with the input port of the main switch S 1.

The main switch S 1 may be a MOSFET or a BJT.

In this embodiment of the present invention, when the external AC power is input, the AC power arrives at the rectifier filter capacitor C1 through the protection fuse F1, the over-voltage protection unit 11, the AC input filter unit 12 and a full-wave rectifier unit 13. Then the AC power charges the smoothing capacitor C2 through D1 and the current limiting resistor R1. When the voltage value of E point is equal to the predetermined value, the energy storage capacitor C4 is charged by 1432, so that the upper port of the voltage value of C4 is raised gradually. When the voltage value of the upper port of C4 reaches the predetermined value, the circuit control unit 1431, the current sampling unit 1434 and the peak-valley value detection unit 1435 begin to work, which makes the whole single-stage power converter begin its function.

The main switch S1 in the single-stage power converter is controlled by center control unit 1431. In normal work condition the main switch S1 has two work mode comprising constant on-time mode and critical conduction mode. If the on-time of S1 is increased, the average current value output from the LED power driver circuit is increased. Otherwise, if the on-time of S1 is decreased, the average current value output from the LED power driver circuit is decreased. The current information about average value of DC output current is obtained through current sampling unit 1434 which detects and handles the current of resistor R2. Then the value of current information is sent to the central control unit 1431 in order to be compared with the predetermined value in the central control unit 1431. Based on the comparison result the on-time of S1 is determined to be increased or decreased. At last the output current value is adjusted to be equal to predetermined value. The desired output current is obtained by this method where the on-time of the main switch S1 may be dynamically adjusted by the central control unit 1431 when fluctuations occur in the load or input voltage.

When the main switch S1 is turned on, the current of inductance L2 is increased, after a constant time, S1 is turned off by the central control unit, the voltage of D point is increased from zero(zero voltage switching off) for parasitic capacitance of S1 and D4. When the voltage of D point exceeds the voltage of K point, D4 is turned on, the current of L2 is exported to an LED load by D4, and the current of L2 is decreased from peak value. When current value of L2 is equal to zero, for the resonance effect in the circuit loop between the inductance L2 and the parasitic capacitance of S1 and D4, the voltage of D point on upper end of S1 is decreased, and a valley value in D point is presented after a period of time. When the valley value is detected by the peak-valley detect unit 1435, the detective information is sent to the central control unit 1431. Based on the valley value of D point detected by the central control unit 1431, the driving switch S2 or the driving switch S3 is determined to turn on S1(zero voltage switching on). By this way, the main switch S1 is turned on only when the voltage value of the input port of S1 is valley value, so that the conduction loss is decreased effectively. After S1 has been turned on for a constant time, the central control unit 1431 turns off S1 by turning off S2 or S3, and the main switch S1 is not turned off immediately. The voltage of D point is not increased to high voltage immediately for the parasitic capacitance of S1 and D4. The voltage of D point is increased gradually, and the voltage of F point is also increased with the voltage of D point. When the voltage difference between F point and E point is equal to the threshold voltage value of S1, S1 is turned off, and the voltage of D point is close to the voltage of E point. Since the voltage of E point is clamped at a fixed value which is far below the voltage of AC input and the voltage of DC output, the conduction loss of the main switch S1 is low. Additionally, because the switching circuit works in the constant on-time mode and the critical conduction mode, a large power factor of the power converter is obtained.

When the voltage value of P point is in the predefined range, the S3 is selected by the central control block 1431 to control the on-off of the S1, so that the single-stage power converter is implemented. The storage capacitor C4 supplies power for whole switching control circuit 143. The voltage of P point is decreased gradually as the power is consumed by the switching control circuit 143 itself. When the voltage of P point is lower than the predetermined value, S2 path is selected by the central control unit 1431 to control S1. When the valley value of D point is presented, the main switch S1 is driven by the switch S1 controlled by the 1431. C4 is charged by the current flowed from L2, S 1 and S2. When the voltage of P point reaches the predetermined value, S2 is turn off, S3 is turned on, and the switching circuit returns to the normal state. Thus the power efficiency is improved greatly.

In this embodiment, the main switch S1 may be a MOSFET or a BJT. When the main switch S1 is a MOSFET, the input port of S1 is D(drain) port, the output port of S1 is S(source) port, the control port of S1 is G(gate) port. When the main switch S1 is a BJT, the input port of S1 is C (collector) port, the output port of S1 is E (emitter) port, the control port of S1 is B (base) port. The driving switch S2 and S3 may be a MOSFET or a BJT. When the driving switch S2 and S3 are MOSFETs, the input port of S2 and S3 is D (drain) port, the output port of S2 and S3 is S (source) port, the control port of S2 and S3 is G (gate) port. When the driving switch S2 and S3 are BJTs, the input port of S2 and S3 is C (collector) port, the output port of S2 and S3 is E (emitter) port, the control port of S2 and S3 is B (base) port.

In this embodiment of the present invention, based on the real-time current information and voltage information, the switching circuit can be controlled dynamically by the circuit of LED driving power. By the dynamical control on the circuit of LED driving power itself, DC output current is generated, the conduction loss of switching is reduced and the power efficiency is improved.

A third embodiment:

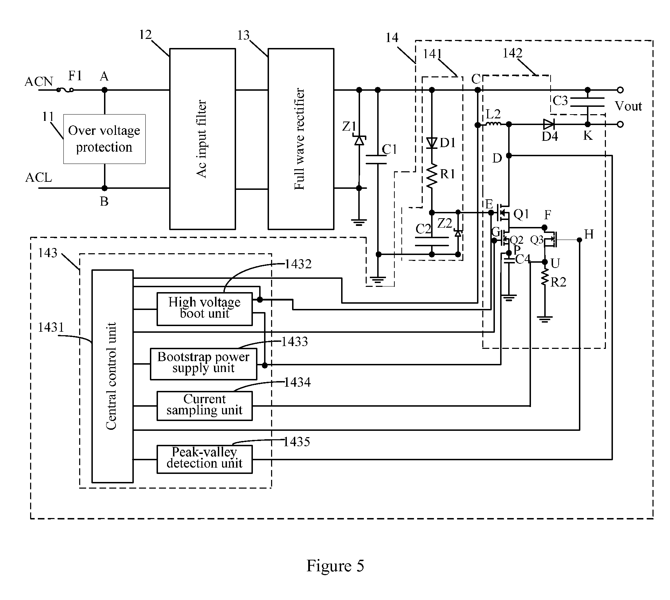

Figure 5 is a circuit structure diagram illustrating the circuit of LED driving power according to an embodiment of the present invention.

The main switch is MOSFET Q1, the driving switch S2 is MOSFET Q2, the driving switch S3 is MOSFET Q3, and source driver style is used.

The drain port of Q2 is connected to the source port of Q1, the source port of Q2 is connected to the first port of energy storage capacitor C4, and the gate port is connected to the switching control unit 143.

The drain port of Q3 is connected with the drain port of Q2, the source port of Q3 is connected with the first port of current sampling resistor R2, and the gate port of Q3 is connected with the switching control unit 143.

In working process, when the voltage of D point is close to zero, Q3 is turned on and the voltage of F point is decreased, which makes Q1 turned on. As Q1 is turned on, the current of power inductor L2 is increased. After Q1 is kept in on-state for a constant time, Q3 is turned off. However, the voltage of D point is not increased immediately. It is increased gradually for the parasitic capacitance from Q1 and D4. When the voltage of F point is close to voltage of E point, Q1 is closed completely, where the voltage of D point is still low, about in teen volts. Therefore, the power consumption in conduction process of the main switch Q1 is low. At the same time, the parasitic capacitance of D point can be charged by the current of power inductor L2.

When the voltage of D point is increased and the voltage exceeds the voltage of K point on DC load, the diode D4 is turned on, the current of L2 flows across D4 and output to LED load, the current of L2 is decreased. When the current of L2 is decreased to zero, for the resonance effect from the parasitic capacitance of Q1 and D4 and the inductance L2, the voltage of D point is decreased. After a period of time, a valley voltage appears on D point. When the voltage of D point is close to zero, Q3 is turned on, so that the power consuming of turning on process of Q1 is reduced.

In the working process, the circuit of LED driving power can limit current in every cycle, so it can supply over-current protection.

A fourth embodiment:

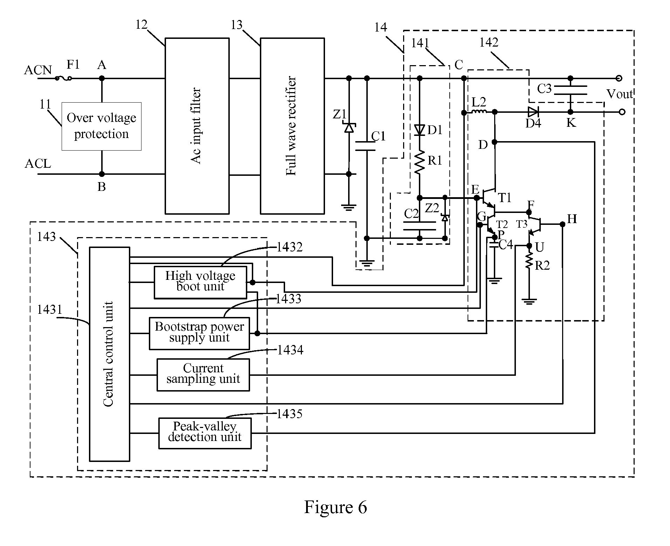

Figure 6 is a circuit structure diagram illustrating the circuit of LED driving power in a third embodiment of the present invention; and for convenience of description, only parts related to the embodiment of the present invention are shown..

The main switch S1 is BJT T1, the driving switch S2 is BJT T2, the driving switch S3 is BJT T3, and the emitter driver style is used.

The collector port of T2 is connected to the emitter port of T1, the emitter port of T2 is connected to the first port of the energy storage capacitor C4 and the base port is connected to the switching control unit 143.

The collector port of T3 is connected with the collector port of T2, the emitter port of T3 is connected with the first port of current sampling resistor R2 and the base port of T3 is connected with the switching control unit 143.

In this embodiment, when the main switch S1 is a MOSFET, the driving switch S2 and S3 may be BJTs. When the main switch is a BJT, the driving S2 and S3 may be MOSFETs.

A fifth embodiment:
The circuit of LED driving power in the present invention can be used in multiple kinds of LED driving power widely which can be used in lighting device field.

In the present invention, the driving control circuit in the single-stage power converter is optimized, thus the total efficiency of LED driving power is improved. The other advantageous effects are detailed as following:
1. The on-off time of the main switch is controlled dynamically by the central control unit based on the comparison result between the sampling value of current and the predetermined value in order to output the desired current.
2. The main switch is driven by the driving switch which is controlled by the central control unit according to the result of detective voltage, so that the power loss of the switching process is reduced.
3. The single stage power converter adopts the constant on-time and the critical conduction mode, so that the power factor of the circuit of LED driving power is improved.
4. The charge and discharge of the single stage power converter are controlled dynamically by itself, which improves the power efficiency.
5. The current is limited gradually in every cycle in the circuit of LED driving power, which provides the rapid protection on over-current situation.
6. The main switch is turned on when the valley value occurs on the input port of the main switch, thus the conduction loss is low.
7. When the main switch is turned off, the voltage of the input port is clamped close to the threshold voltage of the main switch. The voltage is far below AC power input and DC output, so that the conduction loss of the whole circuit switch is reduces effectively.
8. The present circuit of LED driving power has simple structure which can be implemented easily.

The above-mentioned is only the preferred embodiments of the present invention, but places no limit to the invention. Therefore, any modification, equivalent replacement and improvement etc on the basis of the spirit and principle of invention shall be within the protective scope of the present invention.

## Claims

1. A circuit of LED driving power, wherein it comprises a over-voltage protection unit, a AC input filter unit, a full-wave rectifier unit and a single-stage power conversion unit, where the single-stage power conversion unit comprises an auxiliary power supply circuit, a switching circuit and a switching control unit;
the auxiliary power supply circuit connected with the output port of the full-wave rectifier unit is used to provide auxiliary power supply for the switching circuit;
the switching circuit connected with the auxiliary power supply circuit and switching control unit controls DC power output by turning on and turning off the main switch;
the switching control unit connected with the switching circuit is used to control the switching circuit dynamically in order to improve the overall efficiency of the circuit.

2. The circuit of LED driving power according to Claim 1, wherein the switching circuit comprises a main switch S 1, a power inductor L2, a rectifier diode D4, a driving switch S2, a driving switch S3, a current sampling resistor R2 and a energy storage capacitor C4;
the first end of the power inductor L2 is connected with the auxiliary power supply circuit and the switching control unit, the second end of the power inductor L2 is connected with the anode of the rectifier diode D4;
the cathode of the rectifier diode D4 is connected to the DC power output; the input port of the main switch S1 is connected with the anode of the rectifier diode D4 and the switching control unit, the output port of the main switch S1 is connected with the input port of the driving switch S2, the control port of the main switch S 1 is connected to the auxiliary power supply circuit and the switching control unit;
the output port of driving switch S2 is connected with the first port of the storage capacitor C4 and the switching control unit, and the control port is connected with the switching control unit;
the second port of the storage capacitor C4 is connected to ground;
the input port of the driving switch S3 is connected with the output port of the main switch S1, the output port is connected with the first port of the current sampling resistor R2 and the switching control unit, the control port is connected with the switching control unit;
the second port of the current sampling resistor R2 is connected to the ground.

3. The circuit of LED driving power according to Claim 2, wherein the switching control unit in normal work condition, according to the voltage value of the input end of the energy storage capacitor C4, charges the energy storage capacitor C4 by controlling the switching circuit, and the energy storage capacitor C4 supply power for the switching control unit.

4. The circuit of LED driving power according to Claim 3, the main switch S1 is turned on when the valley voltage value occurs in the input port of the main switch S 1;
the voltage of control port of the main switch S1 is fixed at a constant value in normal work condition, the main switch S1 start to turn off when the voltage difference between the voltage of S1' output port and the voltage of S1' control port equals threshold voltage of S 1.

5. The circuit of LED driving power according to Claim 4, wherein the main switch S 1 is a MOSFET or BJT;
when the main switch S1 is MOSFET Q1, the input port of S1 is D (drain) port of Q1, the output port of S1 is S (source) port of Q1, and the control port of S1 is G (gate) port of Q1;
when the main switch S1 is BJT T1, the input port of S1 is C (collector) port of T 1, the output port of S 1 is E (emitter) port of T 1, and the control port of S 1 is B (base) port of T 1.

6. The circuit of LED driving power according to Claim 4, wherein the driving switch S2 is a MOSFET or BJT;
when S2 is MOSFET Q2, the input port of S2 is D (drain) port of Q2, the output port of S2 is S (source) port of Q2, and the control port of S2 is G (gate) port of Q2;
when the main switch S2 is BJT T2, the input port of S2 is C (collector) port of T2, the output port of S2 is E (emitter) port of T2, and the control port of S2 is B (base) port of T2.

7. The circuit of LED driving power according to Claim 4, wherein the driving switch S3 is a MOSFET or BJT;
when S3 is MOSFET Q3, the input port of S3 is D (drain) port of Q3, the output port of S3 is S (source) port of Q3, and the control port of S3 is G (gate) port of Q3;
when the main switch S3 is BJT T3, the input port of S3 is C (collector) port of T3, the output port of S3 is E (emitter) port of T3, and the control port of S3 is B (base) port of T3.

8. The circuit of LED driving power according to Claim 4, wherein the switching control unit comprises a center control unit, a high voltage boot unit, a bootstrap power supply unit, a current sampling unit and a peak-valley value detection unit;
the first port of the center control unit is connected with the first port of power inductor L2, the second port is connected with the control port of the main switch S 1 and the second port of high voltage boot unit, the third port is connected with the first port of high voltage boot unit, the fourth port is connected with the control port of the driving switch S2, the fifth port is connected with the first port of the bootstrap power supply, the sixth port is connected with the first port of current sampling unit, the seventh port is connected with the control port of the driving switch S3, and the eighth port is connected with the first port of the peak-valley value detection unit;
the third port of high voltage boot unit is connected with the first port of C4 and the second port of the bootstrap power supply unit;
the second port of current sampling unit is connected with the output port of driving switch S3;
the second port of peak-valley value detection unit is connected with the input port of the main switch S 1.

9. An LED driving power comprising the circuit of LED driving power according to Claim 1.

10. An LED lighting device comprising the circuit of LED driving power according to Claim 1.
